# EUROPEAN PATENT APPLICATION

(11) **EP 4 794 383 A1**
(43) Date of publication of application: **19.08.2026**
(21) Application number: 24884546.3
(22) Date of filing: 23.10.2024
(51) Int. Cl.: H04W 28/086

(54) **GREEN-ENERGY-BASED LOAD TRANSFER METHOD AND APPARATUS**

(30) Priority: 30.10.2023 CN 202311434392
(71) Applicant: HUAWEI TECHNOLOGIES CO., LTD., Shenzhen 518129 (CN)
(72) Inventor: ZHAO, Xian, Shenzhen, Guangdong 518129 (CN); CAO, Longyu, Shenzhen, Guangdong 518129 (CN)
(74) Representative: Körber, Martin Hans
(86) International application number: PCT/CN2024/126830
(87) International publication number: WO 2025/092542

(57) **Abstract**

This application provides a green energy-based load transfer method and an apparatus. In the method, a value of at least one green energy metric of a first network element is obtained via a first management function, a usage status of green energy of the first network element is analyzed based on the green energy metric, and indication information is sent. The indication information indicates, based on the value of the at least one green energy metric, the first network element to perform green energy-based load transfer between network elements. In this way, when the green energy cannot be flexibly allocated across communication devices, utilization of the green energy can be increased, thereby improving carbon emission efficiency of a communication device.

## Description

This application claims priority to Chinese Patent Application No. 202311434392.8, filed with the China National Intellectual Property Administration on October 30, 2023 and entitled "GREEN ENERGY-BASED LOAD TRANSFER METHOD AND APPARATUS", which is incorporated herein by reference in its entirety.

### TECHNICAL FIELD

This application relates to the field of communication technologies, and in particular, to a green energy-based load transfer method and an apparatus.

### BACKGROUND

Currently, in terms of network construction and maintenance, energy saving and carbon reduction of devices, sites, and equipment rooms are one of the key research directions in the communication field.

In conventional technologies, carbon emission efficiency is typically improved by adjusting a green energy allocation or dispatching policy of a site energy management system, for example, by increasing a proportion of green energy supply. However, the site energy management system has only a limited capability of allocating or dispatching the green energy. For example, solar energy collected by photovoltaic panels mounted on a base station can only be used for the base station. Even if the base station's energy consumption is already fully covered by solar power, under favorable irradiation conditions the solar supply may still exceed the base station's demand. This leads to underutilization of solar energy and further prevents further improvement in carbon emission efficiency.

Therefore, how to further improve carbon emission efficiency of communication devices is a hot issue in current research.

### SUMMARY

Embodiments of this application provide a green energy-based load transfer method and an apparatus, to further improve carbon emission efficiency of communication devices.

To achieve the foregoing objective, this application uses the following technical solutions.

According to a first aspect, a load transfer method is provided. The method is applied to a first management function and includes: obtaining a value of at least one green energy metric of a first network element, where the green energy metric indicates a usage status of green energy. If indication information is sent, the indication information indicates, based on the value of the at least one green energy metric, the first network element to perform green energy-based load transfer between network elements.

Based on the method in the first aspect, it can be learnt that the value of the at least one green energy metric of the first network element is obtained via the first management function, the usage status of the green energy of the first network element is analyzed based on the green energy metric, and the indication information is sent. The indication information indicates, based on the value of the at least one green energy metric, the first network element to perform green energy-based load transfer between network elements. In this way, when the green energy cannot be flexibly allocated across communication devices, utilization of the green energy can be increased, thereby improving carbon emission efficiency of a communication device.

In a possible design solution, the method in the first aspect may further include: before the sending the indication information, determining that a value of a first green energy metric among the at least one green energy metric is not within a threshold range. In other words, if the value of the first green energy metric among the at least one green energy metric is not within the threshold range, it indicates that the value of the first green energy metric is small or large. In this way, it is necessary to send the indication information, to trigger green energy-based load transfer.

In a possible design solution, the indication information indicates a first amount of load to be transferred between the first network element and a second network element based on the green energy metric. The indication information may include at least one of the following: an identifier of the first network element, an identifier of the second network element, and the first amount of load, and the second network element is a network element of a same function type as the first network element. The first network element and the second network element of the same function type are indicated via the first management function to perform green energy-based load transfer, and sending of the first amount of load transferred between the first network element and the second network element is indicated. The first management function can autonomously determine the first network element, the second network element, and a transfer amount between the first network element and the second network element, rather than leaving autonomous determining to be performed by the first network element. In this way, overheads on a device side can be reduced.

Optionally, the at least one green energy metric may include at least one of the following: carbon emission efficiency, an amount of green energy supply, an amount of energy consumption, green energy usage, a green energy power, a proportion of an amount of green energy consumption in the amount of energy consumption, remaining available green energy, carbon emission, and a carbon intensity. The usage status of the green energy may be accurately analyzed based on the green energy metric. Certainly, during actual implementation, a corresponding indicator may be selected based on a specific condition. This is not limited herein.

In a possible design solution, the method in the first aspect may further include: before the sending the indication information to the first network element, obtaining respective energy usage statuses of a plurality of network elements related to the first network element; and determining, from the plurality of network elements based on the respective energy usage statuses of the plurality of network elements, the second network element that is capable of performing load transfer with the first network element. It may be understood that, the plurality of network elements related to the first network element may be network elements of a same function type as the first network element, network elements with a similar physical distance, and/or network elements with overlapping signal coverage. In this way, the second network element that is filtered out may interact with the first network element, and can more conveniently implement green energy-based load transfer with the first network element.

The respective energy usage statuses of the plurality of network elements include differences between values of respective green energy metrics of the plurality of network elements and maximum values or minimum values in threshold ranges of the respective green energy metrics. That the second network element is capable of performing load transfer with the first network element is that a difference between a value of a green energy metric of the first network element and a minimum value in a threshold range of the green energy metric matches a difference between a value of a green energy metric of the second network element and a maximum value in a threshold range of the green energy metric; or a difference between a value of a green energy metric of the first network element and a maximum value in a threshold range of the green energy metric matches a difference between a value of a green energy metric of the second network element and a minimum value in a threshold range of the green energy metric.

In a possible design solution, the indication information indicates a load balancing optimization function to perform green energy-based load balancing between network elements, and the load balancing optimization function is deployed on the first network element. The indication information includes at least one of the following: an identifier of the load balancing optimization function and green energy reference indication information, where the green energy reference indication information indicates whether to perform green energy-based load balancing between network elements based on the green energy metric.

It may be understood that, the first management function directly sends an indicative configuration policy to the first network element, and does not specify a destination of load transfer, and instead, the load balancing optimization function autonomously performs determining, so that the first network element can perform determining based on an actual condition of the first network element, and whether the first network element needs to consider the green energy metric is indicated when performing load balancing adjustment. Therefore, load balancing may be performed more dynamically and more flexibly based on the green energy metric. In addition, the load balancing optimization function defines a new attribute value, that is, reuses an existing information element for implementation, which is more friendly to an existing standard and is less difficult to implement.

In another possible design solution, the indication information indicates a green energy balancing function to perform green energy-based load transfer between network elements, and the green energy balancing function is deployed on the first network element. The indication information includes at least one of the following: an identifier of the green energy balancing function and green energy reference indication information, where the green energy balancing function is used to manage balance between the green energy supply and energy consumption, and the green energy reference indication information indicates whether to perform green energy-based load balancing or load transfer between network elements based on the green energy metric.

It may be understood that, the green energy balancing function may be used to balance and optimize the green energy supply and network element energy consumption, the first management function directly sends an indicative configuration policy to the first network element, and does not specify a destination of load transfer, and instead, the green energy balancing function autonomously performs determining, so that the first network element can perform determining based on an actual condition of the first network element. Therefore, load transfer may be performed more dynamically and more flexibly based on the green energy metric. In addition, the green energy balancing function defines a new information element for implementation, to decouple from the existing solution, and implementation is more flexible.

Optionally, the indication information may further include a threshold range of the at least one green energy metric. The threshold range of the green energy metric is used to specify a standard value of green energy measurement or statistics, does not need to be determined by the first network element, and only needs to be configured on the first network element. Certainly, the threshold range may also be pre-configured or protocol-predefined on the first network element locally, and does not need to be indicated, to reduce communication overheads.

Optionally, sending the indication information may include: sending the indication information to a second management function related to the first network element. The second management function may be a configuration management function, and may be used to forward the indication information to the first network element, or configure a parameter of the load balancing optimization function or the green energy balancing function based on the indication information. When the first management function cannot directly communicate with the first network element, the first management function may indirectly implement indication or configuration on the first network element based on the second management function.

In another possible design solution, the first management function includes a self-organizing network management function and a near-real-time radio intelligent controller module, that is, reuses an existing module for implementation, which is more friendly to an existing standard and is less difficult to implement.

Optionally, when the first management function is the near-real-time radio intelligent controller module, the first network element includes a first base station; and obtaining the value of the at least one green energy metric of the first network element includes: obtaining a traffic metric of a terminal device accessed by the first base station; and determining, based on the traffic metric of the terminal device, a value of at least one green energy metric generated by the terminal device. A terminal device-level green energy metric of the first base station is calculated by monitoring a traffic metric of a service object (a terminal device) served by the first base station, so that a traffic transfer policy can be determined more precisely.

The indication information indicates a terminal device to be migrated between the first base station and a second base station based on the green energy, and the indication information includes an identifier of the first base station, an identifier of the second base station, and an identifier of the terminal device to be migrated among the terminal device accessed by the first base station. Traffic between a plurality of base stations may be intelligently controlled by using a quantity of terminal devices that are migrated based on the green energy and that are accessed by the first base station, to improve user experience.

According to a second aspect, a green energy-base load transfer method is provided, where the method is applied to a third management function and includes: obtaining a threshold range of a green energy metric; and sending a green energy balancing service request to a first management function, where the green energy balancing service request includes at least one of the following: an identifier of a first network element and the threshold range of the green energy metric.

Based on the method in the second aspect, it can be learnt that the third management function may be a green energy management function and a non-real-time radio intelligent controller module, and requests a green energy balancing service from the first management function via the third management function, and carries the identifier of the first network element and the threshold range of the green energy metric, so that the first management function ensures the green energy metric through green energy-based load transfer.

According to a third aspect, a green energy-based load transfer method is provided, where the method is applied to a fourth management function and includes: receiving a measurement request that is for a value of a green energy metric of a first network element and that is sent by a first management function; and sending the value of the green energy metric of the first network element to the first management function based on the measurement request.

Based on the method in the third aspect, it can be learnt that the fourth management function may be a performance management function. The measurement request that is for the value of the green energy metric of the first network element and that is sent by the first management function is received via the fourth management function, the green energy metric of the first network element is measured based on the measurement request, and the value of the green energy metric of the first network element is sent to the first management function, so that the first management function determines indication information based on the value of the green energy metric of the first network element, to implement green energy-based load transfer.

According to a fourth aspect, a green energy-based load transfer method is provided, where the method is applied to a first network element and includes: receiving indication information, where a green energy metric indicates a usage status of green energy, and the indication information indicates the first network element to perform green energy-based load transfer between network elements; and performing green energy-based load transfer between network elements based on the indication information.

In a possible design solution, the indication information indicates a first amount of load to be transferred between the first network element and a second network element based on the green energy metric.

Optionally, the indication information includes an identifier of the first network element, an identifier of the second network element, and the first amount of load, and the second network element is a network element of a same function type as the first network element.

The at least one green energy metric includes at least one of the following: carbon emission efficiency, an amount of green energy supply, an amount of energy consumption, green energy usage, a green energy power, a proportion of an amount of green energy consumption in the amount of energy consumption, remaining available green energy, carbon emission, and a carbon intensity.

Optionally, the second network element is a network element that is determined based on respective energy usage statuses of a plurality of network elements and that is capable of performing load transfer with the first network element, and the plurality of network elements are network elements related to the first network element.

The respective energy usage statuses of the plurality of network elements include differences between values of respective green energy metrics of the plurality of network elements and maximum values or minimum values in threshold ranges of the respective green energy metrics. That the second network element is capable of performing load transfer with the first network element is that a difference between a value of a green energy metric of the first network element and a maximum value or a minimum value in a threshold range of each of the respective green energy metrics matches a difference between a value of a green energy metric of the second network element and a maximum value or a minimum value in a threshold range of each of the respective green energy metrics.

In a possible design solution, the indication information indicates a load balancing optimization function to perform green energy-based load balancing between network elements, the load balancing optimization function is deployed on the first network element, and the indication information includes at least one of the following: an identifier of the load balancing optimization function and green energy reference indication information, where the green energy reference indication information indicates whether to perform green energy-based load balancing between network elements based on the green energy metric.

Optionally, the indication information indicates a green energy balancing function to perform green energy-based load transfer between network elements, the green energy balancing function is deployed on the first network element, and the indication information includes at least one of the following: an identifier of the green energy balancing function and green energy reference indication information, where the green energy balancing function is used to manage balance between the green energy supply and energy consumption, and the green energy reference indication information indicates whether to perform green energy-based load transfer between network elements based on the green energy metric.

Optionally, the indication information further includes a threshold range of the at least one green energy metric.

It may be understood that, for related technical effects of the method in the fourth aspect, refer to the related descriptions of the first aspect. Details are not described herein again.

According to a fifth aspect, a communication apparatus is provided. The communication apparatus includes a module configured to perform the method in any one of the first aspect to the fourth aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the fifth aspect, and the receiving module is configured to implement a receiving function of the communication apparatus in the third aspect.

Optionally, the communication apparatus in the fifth aspect may further include a storage module. The storage module stores a program or instructions. When the processing module executes the program or the instructions, the communication apparatus can perform the method in any one of the first aspect to the fourth aspect.

It may be understood that, the communication apparatus in the fifth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus in the fifth aspect, refer to the technical effects of the first aspect. Details are not described herein again.

According to a sixth aspect, a communication apparatus is provided. The communication apparatus includes a processor, and the processor is configured to perform the method in any one of the first aspect to the fourth aspect.

In a possible design solution, the communication apparatus in the sixth aspect may further include a transceiver. The transceiver may be a transceiver circuit or an interface circuit. The transceiver may be used by the communication apparatus in the sixth aspect to communicate with another communication apparatus.

In a possible design solution, the communication apparatus in the sixth aspect may further include a memory. The memory and the processor may be integrated together, or may be disposed separately. The memory may be configured to store a computer program and/or data in the method in any one of the first aspect to the fourth aspect.

In embodiments of this application, the communication apparatus in the sixth aspect may be the terminal or the network device in any one of the first aspect to the fourth aspect, a chip (system) or another part or component that may be disposed in the terminal or the network device, or an apparatus that includes the terminal or the network device.

In addition, for technical effects of the communication apparatus in the sixth aspect, refer to the technical effects of the method in any one of the first aspect to the fourth aspect. Details are not described herein again.

According to a seventh aspect, a communication apparatus is provided. The communication apparatus includes a processor. The processor is coupled to a memory. The processor is configured to execute a computer program stored in the memory, to enable the communication apparatus to perform the method in any one of the first aspect to the fourth aspect.

In a possible design solution, the communication apparatus in the seventh aspect may further include a transceiver. The transceiver may be a transceiver circuit or an interface circuit. The transceiver may be used by the communication apparatus in the seventh aspect to communicate with another communication apparatus.

In embodiments of this application, the communication apparatus in the seventh aspect may be the terminal or the network device in any one of the first aspect to the fourth aspect, a chip (system) or another part or component that may be disposed in the terminal or the network device, or an apparatus that includes the terminal or the network device.

In addition, for technical effects of the communication apparatus in the seventh aspect, refer to the technical effects of the method in the first aspect. Details are not described herein.

According to an eighth aspect, a communication apparatus is provided, and includes a processor and a memory. The memory is configured to store a computer program, and when the processor executes the computer program, the communication apparatus is enabled to perform the method in any one of the first aspect to the fourth aspect.

In a possible design solution, the communication apparatus in the eighth aspect may further include a transceiver. The transceiver may be a transceiver circuit or an interface circuit. The transceiver may be used by the communication apparatus in the eighth aspect to communicate with another communication apparatus.

In embodiments of this application, the communication apparatus in the eighth aspect may be the terminal or the network device in any one of the first aspect to the fourth aspect, a chip (system) or another part or component that may be disposed in the terminal or the network device, or an apparatus that includes the terminal or the network device.

In addition, for technical effects of the communication apparatus in the eighth aspect, refer to the technical effects of the method in any one of the first aspect to the fourth aspect. Details are not described herein again.

According to a ninth aspect, a communication system is provided. The communication system includes a first communication apparatus configured to perform the method in the first aspect, and a second communication apparatus configured to perform the method in the fourth aspect.

According to a tenth aspect, a computer-readable storage medium is provided, and includes a computer program or instructions. When the computer program or the instructions are run on a computer, the computer is enabled to perform the method in any one of the first aspect to the fourth aspect.

According to an eleventh aspect, a computer program product is provided, and includes a computer program or instructions. When the computer program or the instructions are run on a computer, the computer is enabled to perform the method in any one of the first aspect to the fourth aspect.

### BRIEF DESCRIPTION OF DRAWINGS

FIG. 1A and FIG. 1B are a schematic flowchart of a load balancing method in the conventional technology;
FIG. 2 is a diagram of an architecture of a communication system according to an embodiment of this application;
FIG. 3 is a diagram of a 3GPP network architecture according to an embodiment of this application;
FIG. 4 is a diagram of a deployment architecture of a self-organizing network management function according to an embodiment of this application;
FIG. 5 is a diagram of an O-RAN network architecture according to an embodiment of this application;
FIG. 6 is a schematic flowchart 1 of a green energy-based load transfer method according to an embodiment of this application;
FIG. 7 is a schematic flowchart 2 of a green energy-based load transfer method according to an embodiment of this application;
FIG. 8 is a schematic flowchart 3 of a green energy-based load transfer method according to an embodiment of this application;
FIG. 9 is a schematic flowchart 4 of a green energy-based load transfer method according to an embodiment of this application;
FIG. 10 is a schematic flowchart 5 of a green energy-based load transfer method according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

For ease of understanding, the following first describes technical terms in embodiments of this application.

### 1. Key terms

Carbon footprint (CO2 footprint): A carbon footprint is a total amount of greenhouse gas produced by companies, activities, products, or individuals resulting from transportation, food production and consumption, and various production processes.

Green energy (green energy): Green energy, also referred to as clean energy, new energy, and renewable energy, is energy that does not damage or harm the environment and does not emit pollutants, such as solar power generation and wind power generation.

Green energy metrics: Green energy metrics are a collective term for KPIs that quantify the performance related to the use of green energy or carbon emission resulting from energy consumption by power-supplied devices in communication networks. The green energy metrics include the following examples.

Green energy usage proportion: A green energy usage proportion refers to a proportion of an amount of green energy consumption in a total amount of energy consumption.

Green energy usage: Green energy usage refers to an amount of consumption of green energy between start time and end time.

An amount of green energy supply: An amount of green energy supply refers to an amount of green energy supply calculated or estimated between start time and end time, which is determined by an illumination condition between the start time and the end time.

Carbon emission (carbon emission): Carbon emission refers to an amount of carbon emitted between start time and end time.

Carbon intensity (carbon intensity): A carbon intensity refers to an equivalent amount of carbon dioxide emitted per unit of activity.

Carbon emission efficiency: Also referred to as carbon efficiency.

### 2. 3GPP standard background

Current 3GPP work on energy saving resolves the energy usage problem in communication networks from the perspective of energy efficiency measurement and energy saving.

A method for measuring an energy efficiency key performance indicator (energy efficiency key performance indicator, EE KPI) is defined, and the EE KPI is calculated from the dimensions including end-to-end (end-to-end, E2E) networks, subnets, network elements, and communication sites. In addition, energy efficiency parameters are introduced to a slice service profile (service profile), to reflect requirements of customers for slice energy efficiency.

Two states are defined for cells, network elements (network element, NE), or network functions (network function, NF). In other words, a cell, an NE, or an NF may be on one of the following two states with respect to energy saving: not energy saving state (notEnergySaving state) and energy saving state (energySaving state).

Based on the foregoing energy saving states, a full energy saving solution may include the following two steps:
energy saving activation (energy saving activation): change from the non-energy saving state to the energy saving state; and
energy saving deactivation (energy saving deactivation): change from the energy saving state to the non-energy saving state.

The transition of energy saving states is realized by performing the operations in the foregoing two steps.

### 3. Site energy management system

A site energy management system focuses on unified management of site energy, environment, and security components, monitors performance and alarm information of a related device in real time, to help maintenance personnel remotely manage a site, collects statistics on and analyzes energy consumption at the site, and provides data support suggestions for energy saving optimization. In a scenario in which mains supply, battery supply, and an amount of green energy supply are available, a managed object of the site energy management system includes an energy system, such as a solar panel, mains, UPS, a battery, a diesel generator, and a fuel tank. The solar panel is placed based on a planned position of a base station.

### 4. Definition of a carbon emission efficiency standard in the communication industry

Carbon emission of an information and communication technology (information and communication technology, ICT) site is applicable to all ICT sites of various sizes, including internet technology (internet Technology, IT) equipment rooms located in buildings. Carbon emission of a communication system is defined as follows: ${KPI}_{CE} = {\sum }_{i = 1}^{n} \left({EC}_{i}\times {CEF}_{i}\right)$
ECᵢ, measured in MWh, indicates annual energy consumed by the ICT sites from a power supply i (local, a hot/cold loop, and a power grid);
CEFᵢ indicates an annual average carbon emission factor of the power supply i; and
KPI_{CE} is expressed in tonnes of carbon dioxide equivalents.
Note: ${\sum }_{i = 1}^{n} \left({EC}_{i}\right) = {KPI}_{EC}$

Carbon emission efficiency: Carbon emission efficiency refers to a ratio of a CO2 equivalent of the ICT site to actual energy consumption of the ICT site within one year: ${KPI}_{CEE} = {KPI}_{CE} / {KPI}_{EC}$

### 5. Calculation of carbon emission efficiency

The following is an example of a formula for calculating carbon emission efficiency in a communication network:
Carbon efficiency in embodiments of this application is different from a conventional energy efficiency definition (an effective output provided by per energy consumption). For example, an appropriate multi-dimensional indicator is selected based on network carbon emission and a difference between service focuses in different scenarios to perform comprehensive evaluation, so as to obtain the carbon efficiency. This may lead a wireless network to continuously develop toward a direction of providing more service volumes and better service experience with fewer carbon footprints. For example, the carbon efficiency may satisfy Formula (1): $carbon efficiency = service level / carbon emission$

A numerator is the service level, and is used to describe communication network service utility. Due to an increase of emerging service types in a next-generation wireless network, the service level may be a parameter related to a total data transmission amount, user experience, and a scenario service type, and ri (scenario factor) is determined based on service types and service requirements in different scenarios. For example, Service=r_1*Traffic +r_2*QoS+r_3*Coverage+.... A denominator is the carbon emission (which may also be referred to as a carbon footprint), namely, carbon emission generated by a communication device due to power consumption.

For example, if Q is the carbon footprint, the carbon emission efficiency (carbon efficiency, CE) may satisfy Formula (2): $η_CE = \left(λT\times μ\right) / Q$

η_CE represents the carbon efficiency. λT represents transposition of the vector λ. λ={λ1, λ2, ..., λk} represents weight vectors of K different application scenarios (for example, an ultra-high rate, ultra-large-scale access, high mobility and a low latency, and ultra-low power consumption communication), and a specific value of λk is determined based on a proportion of a K^{th} type of traffic (for example, a proportion of traffic in a K^{th} application scenario in total traffic) and/or importance of the K^{th} application scenario. K may be an integer greater than or equal to 1.

The vector µ={µ1, µ2, ..., µk} represents utility of the K application scenarios. The utility may be used to reflect a communication network effect. For example, the utility may be determined based on a traffic requirement and/or a service capability of a communication system. For example, an intuitive representative indicator of the utility may be a throughput or a quantity of access users. For example, a higher throughput indicates greater utility. For another example, the utility may alternatively be determined based on M different performance indicators shown below. For example, γ={γ1, γ2, ..., γM} represents a vector of a communication network service capability, and includes M different performance indicators. For example, γ1 represents a throughput, y2 represents a latency, and y3 represents a maximum quantity of users. Details are not listed one by one herein. In this case, utility of the k^{th} type of traffic µk depends on a quality of service (quality of service, QoS) requirement of the k^{th} type of traffic and/or γ.

For example, there may be a linear relationship between µk and γ. For example, for some M-dimensional vectors βk, µk=βkT×γ. An M*K-dimensional utility matrix B={β1, β2, ..., βk} may be defined, and µ=By may be obtained by using the matrix. Therefore, the carbon efficiency may be obtained by defining a weight vector w=Bλ, as shown in Formula (3): $η_CE = \left(wT\times γ\right) / Q$

Formula (2) and Formula (3) use different mathematical expressions to represent the carbon efficiency. Formula (2) and Formula (3) may be equivalent. For example, a numerator in Formula (2) may be considered as a linear weighted sum of weights multiplied by utility in different application scenarios. Formula (3) specifically provides a utility calculation manner. For example, utility of one scenario is equal to a weighted sum of weights of a plurality of performance indicators multiplied by values of the performance indicators, that is, µ=Bγ.

Formula (1) to Formula (3) are shown by using an example in which the carbon efficiency indicates per service level brought by per carbon emission of the communication network element. For example, the carbon efficiency may also satisfy any one of Formula (4) to Formula (6):$carbon efficiency = carbon emission / service level$ $η_CE = Q / \left(λT\times μ\right)$ $η_CE = Q / \left(wT\times γ\right)$

For specific descriptions of Formula (4) to Formula (6), refer to Formula (1) to Formula (3). Details are not described herein.

Based on the foregoing descriptions of the carbon intensity and the carbon emission efficiency, for the two indicators: the carbon intensity and the carbon emission efficiency, because the energy management system cannot learn of a traffic condition or a service level of a network, after the performance management functional entity obtains carbon emission or an equivalent amount of carbon dioxide collected by the energy management system, the performance management functional entity further needs to perform secondary processing, for example, calculate measurement values of the two indicators based on definitions of the indicators.

### 6. A procedure of optimizing carbon emission efficiency in the conventional technology

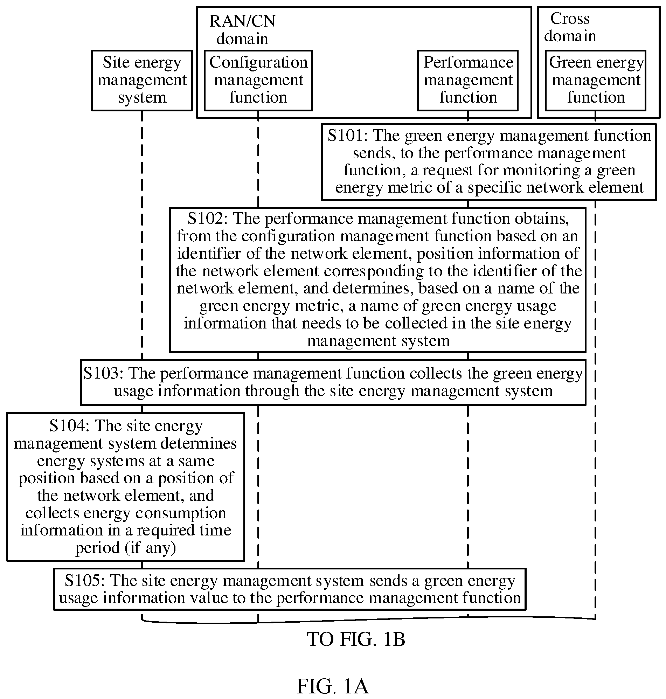

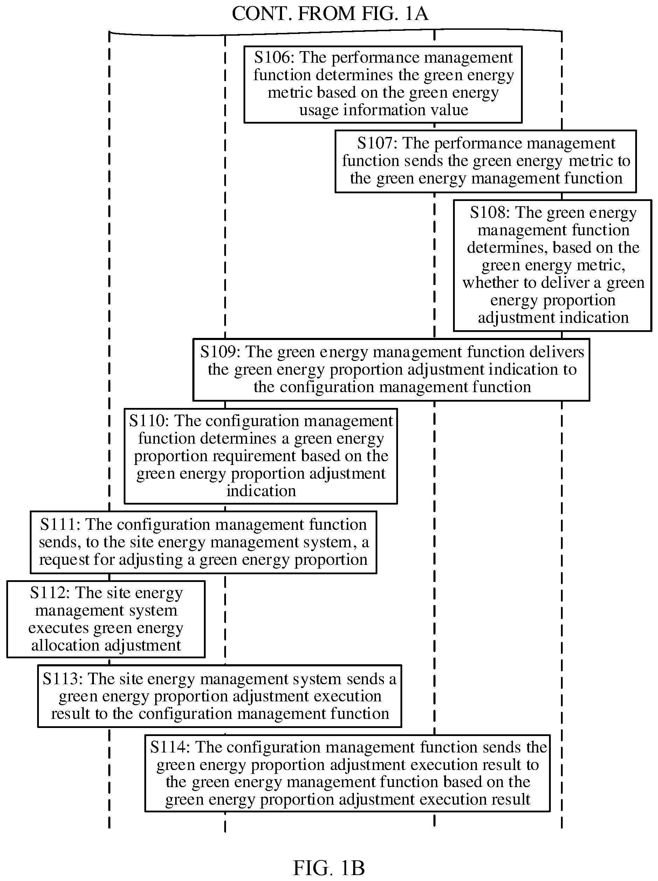

As shown in FIG. 1A and FIG. 1B, the procedure of optimizing the carbon emission efficiency in the conventional technology is as follows.

S101: A green energy management function sends, to a performance management function, a request for monitoring a green energy metric of a specific network element.

The request may include an identifier of the network element, start time and end time, and a name of the green energy metric. The identifier of the network element indicates a monitored object, for example, a specific base station. The start time and the end time are optional parameters, and indicate a specific time period in which a green energy metric is to be measured. The name of the green energy metric is a name of a measurement or statistical indicator that is used for measurement and that is related to use of green energy.

The green energy metric, namely, green energy usage information, for example, a green energy usage proportion (a proportion of an amount of green energy consumption in a total amount of energy consumption), green energy usage (namely, an amount of green energy consumption within the start time and the end time), an amount of green energy supply (an amount of green energy supply calculated or estimated within the start time and the end time, which is determined by an illumination condition within the start time and the end time), carbon emission (carbon emission within the start time and the end time), and a carbon intensity (an equivalent amount of carbon dioxide emitted per unit activity), may be obtained through collection from a site energy management system via a configuration management function. The green energy metric, for example, carbon emission efficiency, may also be obtained by performing secondary processing and calculation on the green energy usage information directly collected from the site energy management system on a network management side.

S102: The performance management function obtains, from the configuration management function based on the identifier of the network element, position information of the network element corresponding to the identifier of the network element, and determines, based on the name of the green energy metric, a name of the green energy usage information that needs to be collected in the site energy management system.

The green energy usage information may be the green energy metric, or may be data that needs to be collected in the site energy management system for calculating the green energy metric (such as the carbon emission efficiency).

S103: The performance management function collects the green energy usage information through the site energy management system.

The green energy usage information may include the green energy usage proportion, the green energy usage, (remaining) available green energy, the carbon emission, and the like. Carried parameters may include measurement start time and measurement end time (optional), the name of the green energy usage information, and a position of the network element.

The position of the network element is used to determine corresponding energy systems in the site energy management system. For example, network elements (managed objects) on the network side are base station devices and the like, and managed objects on the energy side are solar panels, mains, and batteries that supply power to the base station device. Identifiers of the managed objects on the two sides are not interoperable. However, physical positions of the managed objects are associated with each other. For example, the solar panel is deployed with deployment of the base station. Therefore, the managed objects on the two sides may be associated based on position information.

S104: The site energy management system determines energy systems at a same position based on the position of the network element, and collects energy consumption information in a required time period (if any).

S105: The site energy management system sends a green energy usage information value to the performance management function.

S106: The performance management function determines the green energy metric based on the green energy usage information value.

The green energy usage information value may include a value of the green energy usage proportion (for example, 60%), the green energy usage (for example, 2 kilowatt-hours), the amount of green energy supply (for example, 5 kilowatt-hours), the carbon emission (for example, 3 kg of CO2eq, where CO2eq represents equivalent emission of carbon dioxide), the carbon intensity (for example, 3 kg of CO2eq), and the like. The green energy metric is determined based on the green energy usage information value. The green energy metric may be the green energy usage information value, or is obtained by performing secondary processing and calculation on the green energy usage information value, and matches two correspondences between the green energy metric and the green energy usage information that are explained in S101.

S107: The performance management function sends the green energy metric to the green energy management function.

S108: The green energy management function determines, based on the green energy metric, whether to deliver a green energy proportion adjustment indication.

After obtaining a value of the green energy metric, the green energy management function compares the value of the green energy metric with a required value, where the required value may be specified by a cross-domain management system, or may be obtained by receiving an external requirement such as a service-level agreement (service-level agreement, SLA).

S109: The green energy management function delivers the green energy proportion adjustment indication to the configuration management function.

The green energy proportion adjustment indication information is used to specify adjustment of a green energy proportion of the network element, and may include a green energy proportion requirement.

S110: The configuration management function determines the green energy proportion requirement based on the green energy proportion adjustment indication.

If the configuration management function entity has not received the green energy proportion requirement before, or the green energy management function has a new requirement for the green energy proportion, the new requirement may be included in the green energy proportion adjustment indication information and delivered together. If the configuration management function entity has configured the green energy proportion requirement of the network element in advance, the green energy proportion adjustment indication information may not include the green energy proportion requirement.

S111: The configuration management function sends, to the site energy management system, a request for adjusting the green energy proportion.

The request includes the position of the network element, the green energy proportion requirement, and a time period between the start time and the end time. The position of the network element is used to specify an object that receives green energy, and the green energy proportion requirement is a green energy proportion allocated to the network element.

S112: The site energy management system executes green energy allocation adjustment.

Optionally, the green energy proportion is adjusted by adjusting a supply power of a solar photovoltaic panel.

S113: The site energy management system sends a green energy proportion adjustment execution result to the configuration management function.

S114: The configuration management function sends the green energy proportion adjustment execution result to the green energy management function based on the green energy proportion adjustment execution result.

It may be understood that, in conventional technologies, the carbon emission efficiency is improved by adjusting a green energy allocation/dispatching policy of the site energy management system, for example, by increasing a proportion of green energy supply. However, the site energy management system has only a limited capability of allocating or dispatching green energy. For example, solar energy collected by photovoltaic panels mounted on a base station can only be used for the base station. Even if the base station's energy consumption is already fully covered by solar power, under favorable irradiation conditions the solar supply may still exceed the base station's demand. This leads to underutilization of solar energy and further prevents further improvement in carbon emission efficiency.

For the foregoing technical problems, embodiments of this application provide the following technical solutions.

The following describes the technical solutions of this application with reference to accompanying drawings.

The technical solutions in embodiments of this application may be applied to various communication systems, such as a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, 5th generation (5th generation, 5G) like a new radio (new radio, NR) system, and a future communication system.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. By way of example but not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learnt from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that, the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in this embodiment of this application.

In embodiments of this application, descriptions such as "when...", "in a case of...", and "if" all mean that a device performs corresponding processing in an objective case, and are not intended to limit time, and the device is not required to perform a determining action during implementation, and do not mean any other limitation.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof indicates any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

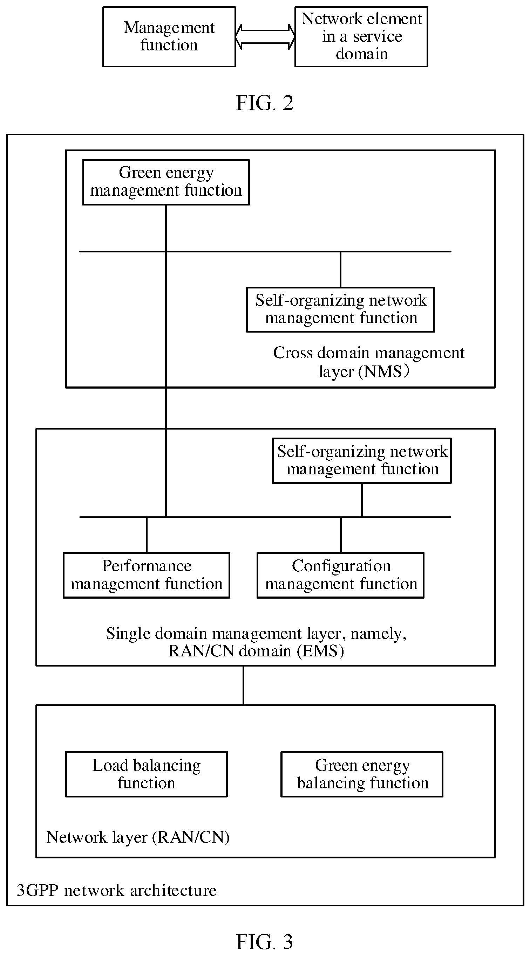

For ease of understanding embodiments of this application, a communication system shown in FIG. 2 is first used as an example to describe in detail a communication system applicable to embodiments of this application. For example, FIG. 2 is a diagram of an architecture of a communication system to which a method provided in embodiments of this application is applicable.

As shown in FIG. 2, the communication system may include a plurality of management functions (which may also be referred to as management function entities and management service providers) and a network element in a service domain. For example, the plurality of management functions may be a first management function, a second management function, ..., and an N^{th} management function, where N is a positive integer. These management functions may be network elements/entities in a management domain, and are configured to manage the network element in the service domain. The network element in the service domain may be a first network element, a second network element, ..., and an M^{th} network element in the service domain, where M is a positive integer.

The communication system in embodiments of this application is applicable to two system architectures: a 3GPP network architecture and an open radio access network (open radio access network, O-RAN) network architecture.

As shown in FIG. 3, the 3GPP network architecture mainly includes a green energy management function, a self-organizing network management function, a configuration management function, a performance management function, a load balancing optimization function, a green energy balancing function, and a radio access network (radio access network, RAN). A plurality of management function network elements in the communication system may include the green energy management function, the self-organizing network management function, the configuration management function, the performance management function, the load balancing optimization function, and the green energy balancing function in the 3GPP network architecture, and the network element in the service domain may be the RAN in the 3GPP network architecture.

Specifically, the green energy management function is used for green energy management. The green energy management function may monitor a green energy metric and determine whether to invoke a management service provided by a SON management function. In this embodiment of this application, the green energy management function may be considered as an invoker of the service provided by the SON management function.

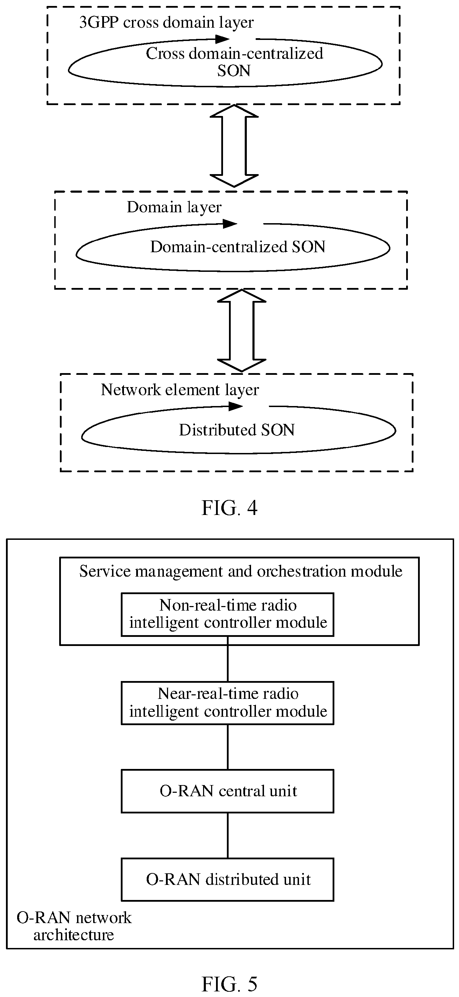

The self-organizing network management function may be, for example, the self-organizing network (self-organizing network, SON) management function. Based on different execution and deployment of a SON algorithm, the SON management function may be classified into a centralized (centralized) SON, a distributed (distributed) SON, and a hybrid (hybrid) SON. As shown in FIG. 4, the centralized SON may continue to be divided into a cross domain-centralized (cross domain-centralized) SON and a domain-centralized (domain-centralized) SON. The hybrid SON represents that the SON algorithm may be performed at two or more different layers. The SON algorithm may include the following functions: monitoring a network, analyzing management data, determining a solution, executing a solution, and evaluating whether a problem is resolved. The SON management function is used to implement management on the SON, such as enabling or disabling a SON function, formulating a policy, and evaluating SON performance. The SON management function may be deployed at a cross domain-centralized layer or a domain-centralized layer. This is not limited in the present invention.

The configuration management function is used to configure and manage a core network element or a base station network element.

The performance management function is used to measure performance of the core network element or the base station network element, such as a latency and a throughput. The performance management function may be further used to measure the green energy metric, such as carbon emission, carbon efficiency, and an amount of green energy supply.

The load balancing optimization function may be, for example, a load balancing optimization (load balancing optimization, LBO) function, and the LBO function is used to implement an executor of an LBO management service, namely, a managed object. When an LBO management service of the SON management function is invoked, for example, when a handover trigger (handover trigger) parameter is modified, an LBO function configuration parameter is updated.

A RAN device is also referred to as an access network apparatus. The access network apparatus may be specifically a next-generation mobile communication system, for example, a 6G access network device, like a 6G base station. Alternatively, in the next-generation mobile communication system, the access network apparatus may also be named in another manner, and all the naming manners fall within the protection scope of embodiments of this application. This is not limited in this application. Alternatively, the access network apparatus may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a radio unit (radio unit, RU), an RSU having a base station function, a wired access gateway, or a 5G core network element. Alternatively, the access network apparatus may further include an access point (access point, AP) in a wireless fidelity (wireless fidelity, Wi-Fi) system, a wireless relay node, a wireless backhaul node, various forms of a macro base station, a micro base station (also referred to as a small cell), a relay station, an access point, a wearable device, a vehicle-mounted device, or the like.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

As shown in FIG. 5, the O-RAN network architecture mainly includes a service management and orchestration (service management and orchestration, SMO) module, a non-real-time radio intelligent controller (non-real-time RAN intelligent controller, Non-RT RIC) module, a near-real-time radio intelligent controller (near-real-time RAN intelligent controller, Near-RT RIC) module, an open central unit (O-RAN central unit, O-CU), and an open distributed unit (O-RAN distributed unit, O-DU). The plurality of management function network elements in the communication system may include the SMO module, the non-RT RIC module, and the near-RT RIC module in the O-RAN network architecture, and the network element in the service domain may include the O-CU and the O-DU in the 3GPP network architecture.

Service management and orchestration is used for management of a radio access network RAN domain. The non-RT RIC is an SMO internal module, and supports management for the RAN, such as configuration policy delivery and ML model management. Because the non-RT RIC is deployed at a management layer, the non-RT RIC is non-real-time. The near-RT RIC may provide near-real-time RAN radio access network control optimization. The O-CU is a CU controller in the O-RAN architecture, and may be further divided into an O-RAN central unit-control plane (O-RAN central unit-control plane, O-CU-CP) and an O-RAN central unit-user plane (O-RAN central unit-user plane, O-CU-UP). The O-DU is a DU controller in the O-RAN architecture.

The foregoing network element may be replaced with a terminal, and the terminal performs load transfer between devices.

The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal may be the terminal, or may be an apparatus that can support the terminal in implementing the function, for example, a chip system. The apparatus may be installed in the terminal or used in matching with the terminal. In this embodiment of this application, the chip system may include a chip, or may include a chip and another discrete component.

In the foregoing system, a value of at least one green energy metric of a first network element is obtained via a first management function, a usage status of green energy of the first network element is analyzed based on the green energy metric, and indication information is sent. The indication information indicates, based on the value of the at least one green energy metric, the first network element to perform green energy-based load transfer between network elements. In this way, when the green energy cannot be flexibly allocated across communication devices, utilization of the green energy can be increased, thereby improving carbon emission efficiency of a communication device. In addition, green energy-based load transfer in this embodiment of this application may also be green energy-based load adjustment, and balance between the green energy supply and energy consumption may be implemented through green energy-based load transfer or load adjustment.

A device form of a network device is not limited in embodiments of this application. An apparatus configured to implement a function of the network device may be the network device, or may be an apparatus that can support the network device in implementing the function, for example, a chip system. The apparatus may be installed in the network device or used in matching with the network device. In this embodiment of this application, the chip system may include a chip, or may include a chip and another discrete component.

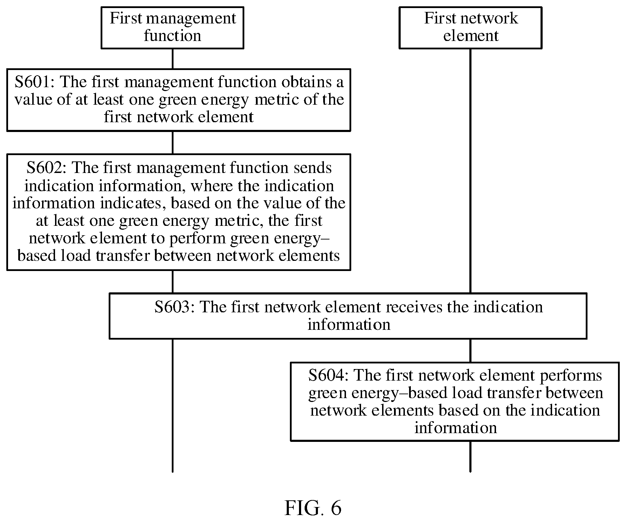

With reference to FIG. 6 to FIG. 10, the following specifically describes an interaction procedure between network elements/devices in the foregoing communication system by using method embodiments. The green energy-based load transfer method provided in embodiments of this application is applicable to the foregoing communication system, and is specifically applied to various scenarios/procedures mentioned in the foregoing communication system. Details are described below.

FIG. 6 is a schematic flowchart 1 of a green energy-based load transfer method according to an embodiment of this application. The green energy-based load transfer method is applicable to the foregoing communication system, and mainly relates to interaction between a first management function and a first network element.

As shown in FIG. 6, the green energy-based load transfer method is applied to the first management function, and a specific procedure is as follows.

S601: The first management function obtains a value of at least one green energy metric of the first network element.

The first management function may be a self-organizing network SON management function in a 3GPP network architecture or a near-real-time radio intelligent controller module in an O-RAN network architecture. The first network element may be any network element in the 3GPP network architecture or the O-RAN network architecture, for example, may be a base station, a user port function (user port function, UPF), and an access and mobility management function (access and mobility management function, AMF). The green energy metric indicates a usage status of green energy. The green energy metric may be obtained from a service profile in a service-level agreement SLA. A slice-level requirement or a network-level indicator requirement may be further decomposed into a green energy metric requirement of a subnet or a network element.

The value of the green energy metric, namely, green energy usage information, may be directly obtained through collection from a site energy management system, or may be obtained by performing secondary processing and calculation on the green energy usage information collected from the site energy management system, for example, carbon emission efficiency.

Optionally, the at least one green energy metric includes at least one of the following: carbon emission efficiency, an amount of green energy supply, an amount of energy consumption, green energy usage, a green energy power, a proportion of an amount of green energy consumption in the amount of energy consumption, remaining available green energy, carbon emission, and a carbon intensity. The usage status of the green energy may be accurately analyzed based on the green energy metric. Certainly, during actual implementation, a corresponding indicator may be selected based on a specific condition. This is not limited herein. For example, when the first network element is the base station, and green energy metric-based load transfer is performed on the base station, the at least one green energy metric may include the carbon emission efficiency, the amount of green energy supply, and the amount of energy consumption.

S602: The first management function sends indication information.

The indication information indicates, based on the value of the at least one green energy metric, the first network element to perform green energy-based load transfer between network elements.

S603: The first network element receives the indication information.

The green energy metric indicates the usage status of the green energy, and the indication information indicates the first network element to perform green energy-based load transfer between network elements.

S604: The first network element performs green energy-based load transfer between network elements based on the indication information.

The following specifically explains S602.

Optionally, the indication information indicates a first amount of load to be transferred between the first network element and a second network element based on the green energy metric. The indication information may include an identifier of the first network element, an identifier of the second network element, and the first amount of load, and the second network element may be a network element of a same function type as the first network element.

It may be understood that, the identifier of the first network element may be an identifier, such as a letter, a digit, or a symbol, that can be used to uniquely determine the first network element, and the identifier of the second network element may be an identifier such as a letter, a digit, or a symbol that can uniquely be used to determine the second network element. A load transfer amount may be obtained through internal analysis of the SON management function, or may be obtained through a management data analysis service (multi-service distributed access system solution, MDAS) or network twin simulation. This is not limited in the present invention. A value of the first amount of load may be a percentage. For example, 50% of a load of the first network element is transferred to the second network element, or an appropriate value may be obtained based on a specific type of a network element. For example, when the first network element is the base station, the amount of load may be represented by a quantity of terminal device connections. When the first network element is the UPF or the AMF, the amount of load may be represented by a quantity of protocol data unit (protocol data unit, PDU) sessions or the quantity of terminal device connections.

The first network element and the second network element of the same function type are indicated via the first management function to perform green energy-based load transfer, and sending of the first amount of load transferred between the first network element and the second network element is indicated. The first management function can autonomously determine the first network element, the second network element, and a transfer amount between the first network element and the second network element, rather than leaving autonomous determining to be performed by the first network element. In this way, overheads on a device side can be reduced.

Optionally, the green energy-based load transfer method may further include: before the sending the indication information to the first network element, obtaining respective energy usage statuses of a plurality of network elements related to the first network element; and determining, from the plurality of network elements based on the respective energy usage statuses of the plurality of network elements, the second network element that is capable of performing load transfer with the first network element.

It may be understood that, the plurality of network elements related to the first network element may be network elements of a same function type as the first network element, network elements with a similar physical distance, and/or network elements with overlapping signal coverage. In this way, the second network element that is capable of performing load transfer with the first network element is filtered out from the plurality of network elements based on the energy usage statuses, to implement green energy-based load transfer of the first network element. For example, the SON management function identifies a plurality of network elements related to a network element 1, obtains respective energy usage statuses of the plurality of network elements, and filters outs, from the plurality of network elements, a network element 2 that is capable of performing load transfer with the network element 1.

The respective energy usage statuses of the plurality of network elements may include differences between values of respective green energy metrics of the plurality of network elements and maximum values or minimum values in threshold ranges of the respective green energy metrics. That the second network element is capable of performing load transfer with the first network element is that a difference between a value of a green energy metric of the first network element and a minimum value in a threshold range of the green energy metric matches a difference between a value of a green energy metric of the second network element and a maximum value in a threshold range of the green energy metric; or a difference between a value of a green energy metric of the first network element and a maximum value in a threshold range of the green energy metric matches a difference between a value of a green energy metric of the second network element and a minimum value in a threshold range of the green energy metric.

It may be understood that, the foregoing matching may be that the difference between the value of the green energy metric of the first network element and the minimum value in the threshold range of the green energy metric is a negative value, and the difference between the value of the green energy metric of the second network element and the maximum value in the threshold range of the green energy metric is a positive value; or the difference between the value of the green energy metric of the first network element and the maximum value in the threshold range of the green energy metric is a positive value, and the difference between the value of the green energy metric of the second network element and the minimum value in the threshold range of the green energy metric is a negative value. That two differences are equal or similar may be further included. In this way, the second network element that is capable of performing load transfer with the first network element may be accurately filtered out.

The green energy metric may be as described in S601, and is not described herein. For example, the SON management function obtains a carbon emission efficiency/carbon intensity measurement value of a base station 1, identifies a list of a plurality of base stations adjacent to the base station 1, and collects respective carbon emission efficiency/carbon intensity measurement values of the plurality of base stations. If the carbon emission efficiency/carbon intensity measurement value of the base station 1 is greater than a maximum value in a threshold range of carbon emission efficiency/a carbon intensity, it is determined whether a base station 2 whose carbon emission efficiency/carbon intensity measurement value is less than the minimum value in the threshold range of the carbon emission efficiency/the carbon intensity exists in the plurality of adjacent base stations. When the base station 2 whose carbon emission efficiency/carbon intensity measurement value is less than the minimum value in the threshold range of the carbon emission efficiency/the carbon intensity exists in the plurality of adjacent base stations, the SON management function delivers indication information to the base station 1 and the base station 2, where the indication information is a load adjustment policy, and is used to transfer a part of load of the base station 1 to the base station 2 on a premise that the carbon emission efficiency/carbon intensity measurement value of the base station 2 is not greater than the maximum value in the threshold range of the carbon emission efficiency/the carbon intensity, so that the carbon emission efficiency/the carbon intensity of the base station 1 is reduced.

In addition, the respective energy usage statuses of the plurality of network elements may also be differences between respective green energy supplies of the plurality of network elements and amounts of energy consumption of the plurality of network elements. That the second network element is capable of performing load transfer with the first network element is that a difference between an amount of green energy supply of the first network element and an amount of energy consumption of the first network element matches a difference between an amount of green energy supply of the second network element and an amount of energy consumption of the second network element.

It may be understood that, the second network element is filtered out based on the differences between the respective green energy supplies of the plurality of network elements and the amounts of energy consumption of the plurality of network elements. The foregoing matching may be that the difference between the amount of green energy supply of the first network element and the amount of energy consumption of the first network element is a negative value, and the difference between the amount of green energy supply of the second network element and the amount of energy consumption of the second network element is a positive value. That is, the amount of green energy supply of the first network element is less than the amount of energy consumption of the first network element, and the amount of green energy supply of the second network element is greater than the amount of energy consumption of the second network element. Alternatively, the difference between the amount of green energy supply of the first network element and the amount of energy consumption of the first network element is a positive value, and the difference between the amount of green energy supply of the second network element and the amount of energy consumption of the second network element is a negative value. That is, the amount of green energy supply of the first network element is greater than the amount of energy consumption of the first network element, and the amount of green energy supply of the second network element is less than the amount of energy consumption of the second network element. That two differences are equal or similar may be further included. In this way, the second network element that is capable of performing load transfer with the first network element may be accurately filtered out.

For example, the SON management function obtains an amount of green energy supply and an amount of energy consumption of the base station 1, identifies the list of the plurality of base stations adjacent to the base station 1, and collects respective green energy supplies and amounts of energy consumption of the plurality of base stations. If the amount of green energy supply of the base station 1 is less than the amount of energy consumption of the base station 1, it is determined whether the base station 2 whose amount of green energy supply is greater than an amount of energy consumption exists in the plurality of adjacent base stations. When the base station 2 whose amount of green energy supply is greater than the amount of energy consumption exists in the plurality of adjacent base stations, the SON management function delivers the indication information to the base station 1 and the base station 2, where the indication information is the load adjustment policy, and is used to transfer the part of load of the base station 1 to the base station 2.

In addition, if there are a plurality of second network elements that are capable of performing load transfer with the first network element, the part of load of the first network element are transferred to the plurality of second network elements in a distributed manner. For example, if it is found that green energy supplies of the plurality of base stations 2 are greater than amounts of energy consumption of the plurality of base stations 2, the SON management function may transfer the part of load of the base station 1 to other plurality of base stations 2 in a distributed manner on a premise of considering impact on network service quality caused by network load adjustment.

For another example, if the amount of green energy supply of the base station 1 is greater than the amount of energy consumption of the base station 1, it is determined whether the base station 2 whose amount of green energy supply is less than the amount of energy consumption exists in the plurality of adjacent base stations. When the base station 2 whose amount of green energy supply is less than amounts of energy consumption exist in the plurality of adjacent base stations, the SON management function delivers the indication information to the base station 1 and the base station 2, where the indication information is the load adjustment policy, and is used to transfer a part of load of the base station 2 to the base station 1.

In addition, if there are a plurality of second network elements that are capable of performing load transfer with the first network element, the part of load of the first network element are transferred to the plurality of second network elements in a distributed manner. For example, if it is found that green energy supplies of the plurality of base stations 2 are less than amounts of energy consumption of the plurality of base stations 2, the SON management function may transfer a part of load of the plurality of base station 2 to the base station 1 in a central manner on a premise of considering impact on network service quality caused by network load adjustment. In this way, loads of adjacent network elements are adjusted to implement balance between energy consumption and green energy supply. For example, an amount of load of a base station with sufficient the green energy supply is increased, to implement carbon efficiency optimization.

Optionally, the indication information indicates a load balancing optimization function to perform green energy-based load balancing between network elements, and the load balancing optimization function is deployed on the first network element. The indication information includes at least one of the following: an identifier of the load balancing optimization function and green energy reference indication information.

It may be understood that, the load balancing optimization function may be an LBO function, and the LBO function may be a load balancing optimization execution entity, and is configured to perform green energy-based load balancing self-optimization, to implement balance between energy consumption and green energy supply. An identifier of the LBO function may be an identifier, such as a letter, a digit, or a symbol, that can be used to uniquely determine the LBO function. The first management function directly sends an indicative configuration policy to the LBO function deployed on the first network element, and does not specify a destination of load transfer, and instead, the LBO function autonomously performs determining, so that a purpose of transfer can be to optimize the carbon emission efficiency. The green energy reference indication information indicates whether to perform green energy-based load transfer between network elements based on the green energy metric. For example, when a value of the green energy reference indication information indicates "yes", for example, "1", it indicates that the first network element needs to consider the green energy metric when performing load balancing adjustment; or when a value of the green energy reference indication information indicates "no", for example, "0", it indicates that the first network element does not need to consider the green energy metric when performing load balancing adjustment.

In this way, the first network element may perform determining based on an actual condition of the first network element, and therefore, may perform load balancing more dynamically and more flexibly based on the green energy metric.

Optionally, the first management function requests a second management function to modify a load balancing optimization function attribute. A modified load balancing optimization function attribute indicates that the load balancing optimization function needs to perform green energy-based load balancing optimization. The second management function may be a configuration management function. The load balancing optimization function attribute may be a newly added parameter. For example, if the green energy reference indication information is newly added, and a value of the green energy reference indication information is modified from "0" to "1", it indicates that the LBO function needs to perform green energy-based load balancing optimization.

For example, the first management function sends, to the configuration management function, a request for modifying an LBO function attribute. The request may include the identifier of the LBO function and the green energy reference indication information, and may further include a value range of the green energy metric. If the configuration management function modifies the LBO function attribute (a non-standard interface), and the value of the green energy reference indication information is modified from "0" to "1", the LBO function performs green energy-based load balancing optimization. That is, when it is determined that a terminal device accesses a cell or performs base station handover, impact on a green energy metric of the cell or a base station after the handover is considered.

In another possible design solution, the indication information indicates a green energy balancing function to perform green energy-based load transfer between network elements, and the green energy balancing function is deployed on the first network element. The indication information includes at least one of the following: an identifier of the green energy balancing function and green energy reference indication information, where the green energy balancing function is used to manage balance between the green energy supply and energy consumption, and the green energy reference indication information indicates whether to perform green energy-based load transfer between network elements based on the green energy metric.

It may be understood that, the green energy balancing function may be used as a newly added managed object, and is used for balancing optimization between the green energy supply and network element energy consumption. The identifier of the green energy balancing function may be an identifier, such as a letter, a number, or a symbol, that can be used to uniquely determine the green energy balancing function. The first management function directly sends the indicative configuration policy to the green energy balancing function deployed on the first network element, and does not specify the destination of load transfer, and instead, the green energy balancing function autonomously performs determining, so that it indicates that the first network element needs to consider the green energy metric when performing load transfer adjustment, that is, a purpose of transfer can be to optimize the carbon emission efficiency.

Optionally, the first management function requests the second management function to modify a green energy balancing function attribute. A modified green energy balancing function attribute indicates that the green energy balancing function needs to perform green energy-based load balancing optimization. The second management function may be the configuration management function. The green energy balancing function attribute may be a newly added parameter. For example, if the green energy reference indication information is newly added, and a value of the green energy reference indication information is modified from "0" to "1", it indicates that the green energy balancing function needs to perform green energy-based load balancing optimization.

For example, the first management function sends, to the configuration management function, a request for modifying the green energy balancing function attribute. The request may include the identifier of the green energy balancing function and the green energy reference indication information, and may further include a value range of the green energy metric. The configuration management function modifies the green energy balancing function attribute. If the value of the green energy reference indication information is modified from "0" to "1", the green energy balancing function performs green energy-based load balancing optimization. That is, when it is determined that a terminal device accesses a cell or performs base station handover, impact on a green energy metric of the cell or a base station after the handover is considered.

Optionally, the indication information may further include a threshold range of the at least one green energy metric. The threshold range of the green energy metric is used to specify a standard value of green energy measurement or statistics. A green energy metric measurement value is analyzed based on the threshold range of the at least one green energy metric, to determine whether the green energy metric measurement value satisfies a requirement. For example, a difference between green energy supply and energy consumption of a base station is analyzed, to determine whether to implement green energy balancing by adjusting a load of the base station.

For example, the SON management function analyzes the green energy metric measurement value. When monitoring a case in which a carbon emission efficiency measurement value of the base station 1 is not within the threshold range, the SON management function directly sends the indicative configuration policy, namely, the indication information, to the LBO function or the green energy balancing function that is deployed on the base station 1, and requires the base station 1 to consider impact on the carbon emission efficiency when performing load balancing adjustment.

Optionally, before S602, the green energy-based load transfer method may further include: determining that a value of a first green energy metric among the at least one green energy metric is not within a threshold range.

The first green energy metric may be any green energy metric among the at least one green energy metric, for example, may be the carbon emission efficiency measurement value. If the value of the first green energy metric among the at least one green energy metric is not within the threshold range, it indicates that the value of the first green energy metric is small or large. In this way, it is necessary to send the indication information, to trigger green energy-based load transfer.

For example, the first management function analyzes the value of the green energy metric, and determines the indication information. When monitoring a case in which a carbon emission efficiency measurement value of the network element 1 is not within the threshold range, the first management function determines the network element 1 as a network element object requiring green energy balancing adjustment, and determines an adjustment policy, namely, the indication information.

Optionally, sending the indication information may include: sending the indication information to a second management function related to the first network element.

The second management function related to the first network element may be the configuration management function, and may be used to forward the indication information to the first network element, or configure a parameter of the load balancing optimization function or the green energy balancing function based on the indication information, so that the first network element can accurately execute the indication information.

For example, the first management function sends the indication information to the configuration management function. After determining the indication information (the load adjustment policy), the first management function delivers, to the configuration management function, an identifier of the network element 1 (an identifier of a source network element) from which load needs to be migrated, an identifier of the network element 2 (an identifier of a destination network element) to which the load is migrated, and an amount of load to be transferred. The configuration management function sends the indication information to the network element 1, and may further send the indication information to the network element 2 that is capable of performing load transfer with the network element 1. The configuration management function configures the received policy for the related network element 1 and network element 2 (this interface is a non-standard interface), so that the network element 1 and the network element 2 in a RAN/CN domain perform load transfer according to a configuration policy of the configuration management function.

When the first management function cannot directly communicate with the first network element, the first management function may indirectly implement indication or configuration on the first network element based on the second management function.

In another possible design solution, the first management function may include a self-organizing network management function and a near-real-time radio intelligent controller module.

Optionally, when the first management function is the near-real-time radio intelligent controller module, the first network element may include a first base station; and obtaining the value of the at least one green energy metric of the first network element may include: obtaining a traffic metric of a terminal device accessed by the first base station; and determining, based on the traffic metric of the terminal device, a value of at least one green energy metric generated by the terminal device.

It may be understood that, the near-real-time radio intelligent controller module monitors green energy metrics of the first base station and an adjacent base station, and monitors a traffic metric of a service object (a terminal device) served by the base station, where the traffic metric may be, for example, a proportion of traffic of the terminal device in total traffic of the base station. When the first management function is the near-real-time radio intelligent controller module, the indication information may include a traffic transfer policy.

Optionally, a value of at least one green energy metric of the first base station is obtained, and it is determined whether a value of a green energy metric in the value of the at least one green energy metric is not within the threshold range.

For example, the near-real-time radio intelligent controller module obtains a value of at least one green energy metric of the base station 1, and if a value of the carbon emission efficiency in the value of the at least one green energy metric is not within the threshold range, analyzes the difference between the green energy supply and the energy consumption of the base station. Traffic of a terminal device accessed by the base station 1 and total traffic of the base station are obtained through an open central unit and/or an open distributed unit, and a proportion of the traffic of the terminal device in the total traffic of the base station is calculated. Because the proportion of the traffic of the terminal device in the total traffic of the base station is equal to a proportion of green energy consumption of the terminal device in total green energy consumption of the base station, an amount of green energy consumption at a terminal device level may be deduced.

In this way, a terminal device-level green energy metric of the first base station is calculated by monitoring the traffic metric of the service object: the terminal device, served by the first base station, so that the traffic transfer policy can be determined more precisely.

The indication information indicates a terminal device to be migrated between the first base station and a second base station based on the green energy, and the indication information may include an identifier of the first base station, an identifier of the second base station, and an identifier of the terminal device to be migrated among the terminal device accessed by the first base station.

For example, if the near-real-time radio intelligent controller module determines that an amount of green energy consumption of the terminal device accessed by the base station 1 (or a CU 1) is excessively high, that is, exceeds the threshold range, the terminal device accessed by the base station 1 is transferred to the base station 2 (or another CU), that is, a quantity of terminal devices connected to the base station 1 is reduced, and the load of the base station 1 is reduced. If the amount of green energy consumption of the terminal device accessed by the base station 1 (or the CU 1) is excessively low, that is, does not reach a minimum value of the threshold range, a terminal device accessed by the base station 2 (or the another CU) is transferred to the base station 1 (or the CU 1), that is, the quantity of terminal devices connected to the base station 1 is increased, and a quantity of terminal devices connected to the base station 2 is reduced, to achieve effect of load balancing based on the green energy metric. There may be one or more base stations 2. This is not limited herein.

It may be understood that, traffic between a plurality of base stations may be intelligently controlled by using a quantity of terminal devices that are migrated based on the green energy and that are accessed by the first base station, to improve user experience.

An embodiment of this application provides another green energy-based load transfer method. The green energy-based load transfer method is applied to a third management function, and includes: obtaining a threshold range of a green energy metric; and sending a green energy balancing service request to a first management function, where the green energy balancing service request may include at least one of the following: an identifier of a first network element and the threshold range of the green energy metric.

It may be understood that, the third management function may be a green energy management function or a non-real-time radio intelligent controller module, and obtains the threshold range of the green energy metric, namely, a green energy metric requirement. The threshold range of the green energy metric may be specified by a cross-domain management system, or may be obtained by receiving an external requirement such as a service profile in an SLA. The green energy balancing service request is used to request the first management function to trigger a green energy balancing service, request the green energy balancing service from the first management function via the third management function, and carry the identifier of the first network element and the threshold range of the green energy metric, so that the first management function ensures the green energy metric through green energy-based load transfer.

For example, the green energy management function obtains the threshold range of the green energy metric, and sends a request for triggering a green energy balancing self-organizing service to an SON management function. The request may include an identifier of a network element 1 and a parameter of the threshold range of the green energy metric.

For another example, the non-real-time radio intelligent controller module obtains the threshold range of the green energy metric, and sends a request for a green energy-based traffic transfer policy to a near-real-time radio intelligent controller module. The request may include an identifier of a base station 1, the threshold range of the green energy metric, and green energy reference indication information. The green energy-based traffic transfer policy has a same function as the foregoing green energy balancing self-organizing service. The traffic transfer policy aims to intelligently control traffic between a plurality of cells through performance monitoring and closed-loop control.

Optionally, the third management function obtains a value of at least one green energy metric, compares the value of the green energy metric with the threshold range of the green energy metric, and determines, based on a comparison result, whether to trigger a green energy balancing function. It is determined whether to trigger the green energy balancing function based on a site energy consumption condition. For example, when green energy supply is severely greater than or less than energy consumption, the green energy balancing function is triggered.

In addition, the first network element may be a network element whose green energy supply and actual energy consumption are severely unbalanced. If the green energy management function does not filter out the first network element whose green energy supply and actual energy consumption are severely unbalanced, the identifier of the first network element is an identifier of a network element for which the green energy management function expects to implement green energy self-balancing, and whether the green energy is balanced is monitored and managed by the first management function.

An embodiment of this application provides still another green energy-based load transfer method. The green energy-based load transfer method is applied to a fourth management function, and includes: receiving a measurement request that is for a value of a green energy metric of a first network element and that is sent by a first management function; and sending the value of the green energy metric of the first network element to the first management function based on the measurement request.

It may be understood that, the fourth management function may be a performance management function, and the measurement request may include an identifier of the first network element. The measurement request that is for the value of the green energy metric of the first network element and that is sent by the first management function is received via the fourth management function, and the green energy metric of the first network element is measured based on the measurement request. The green energy metric may be directly obtained through measurement, or may be obtained through calculation after measurement.

For example, a SON management function sends, to the performance management function, a request for measuring a value of a green energy metric of a network element 1. The request may include an identifier of the network element 1, and the green energy metric herein may be, but is not limited to, a green energy metric obtained by a green energy management function. Further, the performance management function returns the value of the green energy metric to the SON management function.

In this way, the fourth management function sends the value of the green energy metric of the first network element to the first management function based on the measurement request, so that the first management function determines indication information based on the value of the green energy metric of the first network element, to implement green energy-based load transfer.

A specific implementation principle of S603 and S604 is similar to that of S601 and S602. For understanding, refer to S601 and S602. Details are not described herein again.

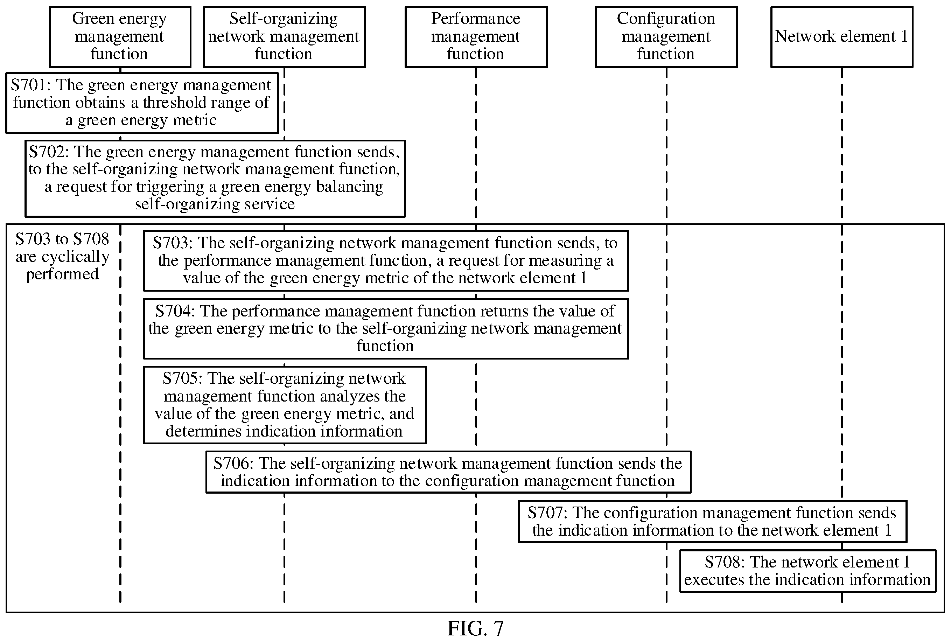

With reference to FIG. 6, the foregoing describes an overall procedure of the green energy-based load transfer method provided in embodiments of this application. With reference to FIG. 7 to FIG. 10, the following specifically describes a specific procedure of the green energy-based load transfer method provided in embodiments of this application in each scenario.

### Scenario 1:

FIG. 7 is a schematic flowchart 2 of a green energy-based load transfer method according to an embodiment of this application. The green energy-based load transfer method is applicable to the foregoing 3GPP network architecture, and specifically relates to interaction between a self-organizing network management function (namely, the foregoing first management function), a green energy management function (namely, the foregoing third management function), a configuration management function (namely, the foregoing second management function), a performance management function (namely, the foregoing fourth management function), and a network element 1 (namely, the foregoing first network element). In the scenario 1, the self-organizing network management function analyzes a usage status of green energy of the first network element based on a green energy metric, and indicates the first network element to perform green energy-based load transfer between network elements, so that when the green energy cannot be flexibly allocated across communication devices, utilization of the green energy can be increased, thereby improving carbon emission efficiency of a communication device.

Specifically, as shown in FIG. 7, a procedure of the green energy-based load transfer method is as follows.

S701: The green energy management function obtains a threshold range of the green energy metric.

The threshold range of the green energy metric is used to specify a standard value of green energy measurement or statistics.

It may be understood that, for specific implementation of the threshold range of the green energy metric, refer to related descriptions in S602. Details are not described herein again.

S702: The green energy management function sends, to the self-organizing network management function, a request for triggering a green energy balancing self-organizing service.

The self-organizing network management function may be a SON management function, and the request for triggering the green energy balancing self-organizing service may include an identifier of the network element 1 and the threshold range of the green energy metric. The green energy balancing self-organizing service is a green energy-based load balancing service. The network element 1 may be a network element in a RAN domain or a CN domain.

S703: The self-organizing network management function sends, to the performance management function, a request for measuring a value of the green energy metric of the network element 1.

The request for measuring the value of the green energy metric of the network element 1 may include the identifier of the network element 1, and the green energy metric herein may be, but is not limited to, the green energy metric obtained by the green energy management function.

In addition, for specific implementation of the value of the green energy metric, refer to related descriptions in S601. Details are not described herein again.

S704: The performance management function returns the value of the green energy metric to the self-organizing network management function.

S705: The self-organizing network management function analyzes the value of the green energy metric, and determines indication information.

For example, when monitoring a case in which a carbon emission efficiency measurement value of the network element 1 is not within the threshold range, the self-organizing network management function determines the network element 1 as a network element object requiring green energy balancing adjustment, and determines an adjustment policy, namely, the indication information.

S706: The self-organizing network management function sends the indication information to the configuration management function.

S707: The configuration management function sends the indication information to the network element 1.

After determining the indication information (a load adjustment policy), the SON management function delivers, to the configuration management function, an identifier of the network element 1 (an identifier of a source network element) from which load needs to be migrated, an identifier of a network element 2 (an identifier of a destination network element) to which the load is migrated, and an amount of load to be transferred. The configuration management function sends the indication information to the network element 1, and may further send the indication information to the network element 2 that is capable of performing load transfer with the network element 1. The configuration management function configures the received policy for the related network element 1 and network element 2 (this interface is a non-standard interface).

S708: The network element 1 executes the indication information.

The network element 1 and the network element 2 perform load transfer according to a configuration policy of the configuration management function.

In addition, S703 to S708 may occur cyclically to reflect self-organizing of a network.

### Scenario 2:

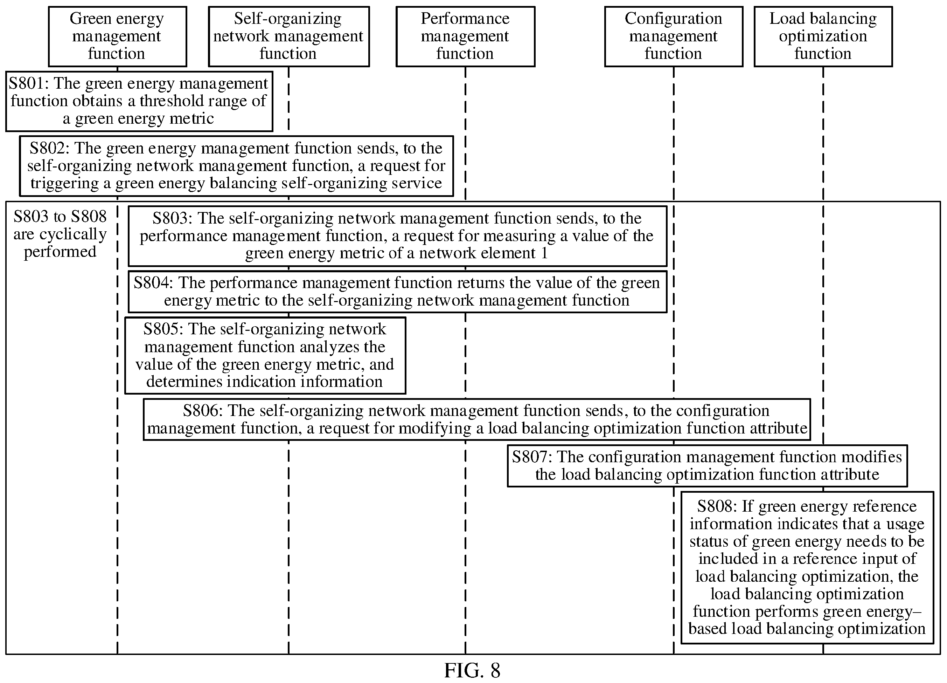

FIG. 8 is a schematic flowchart 3 of a green energy-based load transfer method according to an embodiment of this application. The green energy-based load transfer method is applicable to the foregoing 3GPP network architecture, and specifically relates to interaction among a self-organizing network management function (namely, the foregoing first management function), a green energy management function (namely, the foregoing third management function), a configuration management function (namely, the foregoing second management function), a performance management function (namely, the foregoing fourth management function), and a load balancing optimization function (that is, deployed on the foregoing first network element). In the scenario 2, the self-organizing network management function analyzes a usage status of green energy of the first network element based on a green energy metric, and indicates a load balancing optimization function deployed on the first network element to perform green energy-based load balancing between network elements, so that the first network element may perform determining based on an actual condition of the first network element, and perform load balancing more dynamically and more flexibly based on the green energy metric.

Specifically, as shown in FIG. 8, a procedure of the green energy-based load transfer method is as follows:
S801: The green energy management function obtains a threshold range of the green energy metric.
S802: The green energy management function sends, to the self-organizing network management function, a request for triggering a green energy balancing self-organizing service.
S803: The self-organizing network management function sends, to the performance management function, a request for measuring a value of the green energy metric of a network element 1.
S804: The performance management function returns the value of the green energy metric to the self-organizing network management function.
S805: The self-organizing network management function analyzes the value of the green energy metric, and determines indication information.

For specific implementation of S801 to S805, refer to related descriptions in S701 to S705. Details are not described again.

S806: The self-organizing network management function sends, to the configuration management function, a request for modifying a load balancing optimization function attribute.

The request for modifying the load balancing optimization function attribute may include an identifier of the load balancing optimization function and green energy reference indication information, and may further include a value range of the green energy metric. The load balancing optimization function may be an LBO function.

In addition, for specific implementation of the green energy reference indication information, refer to related descriptions in S602. Details are not described herein again.

S807: The configuration management function modifies the load balancing optimization function attribute.

S808: If green energy reference information indicates that the usage status of the green energy needs to be included in a reference input of load balancing optimization, the load balancing optimization function performs green energy-based load balancing optimization.

A value of the green energy reference information may be represented by "yes/no", "on (on)/off (off)", or "0/1". This is not limited herein. For example, when the value of the green energy reference information is "yes", "on (on)", or "1", it indicates that the usage status of the green energy needs to be included in the reference input of the load balancing optimization. Green energy-based load balancing optimization is: When it is determined that a terminal device accesses a cell or performs base station handover, impact on a green energy metric of the cell or a base station after the handover is considered.

In addition, S803 to S808 may occur cyclically to reflect self-organizing of a network.

### Scenario 3:

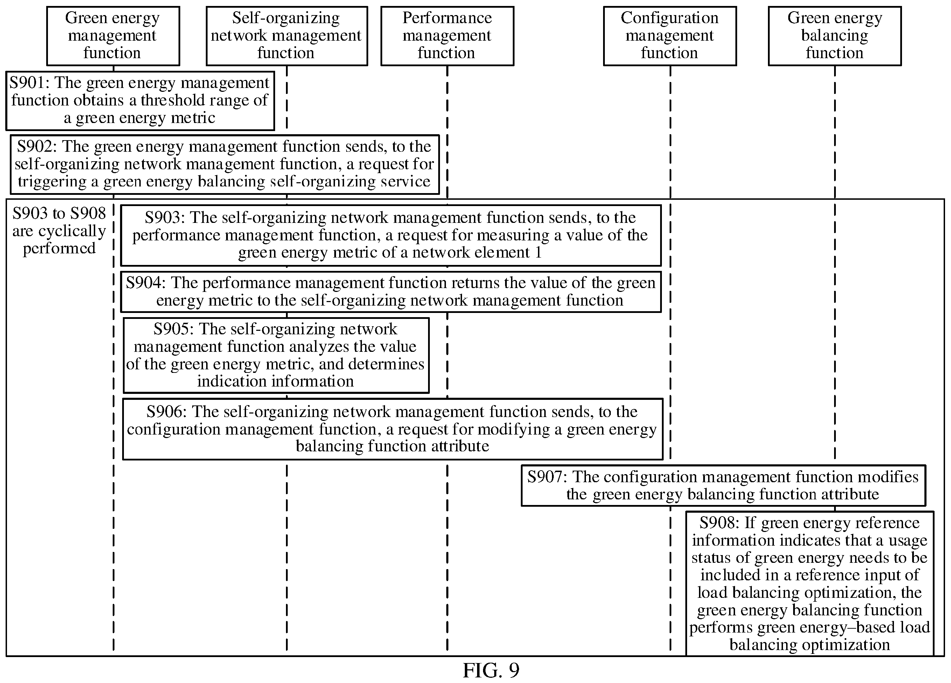

FIG. 9 is a schematic flowchart 4 of a green energy-based load transfer method according to an embodiment of this application. The green energy-based load transfer method is applicable to the foregoing 3GPP network architecture, and specifically relates to interaction among a self-organizing network management function (namely, the foregoing first management function), a green energy management function (namely, the foregoing third management function), a configuration management function (namely, the foregoing second management function), a performance management function (namely, the foregoing fourth management function), and a green energy balancing function (that is, deployed on the foregoing first network element). In the scenario 3, the self-organizing network management function analyzes a usage status of green energy of the first network element based on a green energy metric, and indicates a green energy balancing function deployed on the first network element to perform green energy-based load transfer between network elements, so that the first network element may perform determining based on an actual condition of the first network element, and perform load transfer more dynamically and more flexibly based on the green energy metric.

Specifically, as shown in FIG. 9, a procedure of the green energy-based load transfer method is as follows:
S901: The green energy management function obtains a threshold range of the green energy metric.
S902: The green energy management function sends, to the self-organizing network management function, a request for triggering a green energy balancing self-organizing service.
S903: The self-organizing network management function sends, to the performance management function, a request for measuring a value of the green energy metric of a network element 1.
S904: The performance management function returns the value of the green energy metric to the self-organizing network management function.
S905: The self-organizing network management function analyzes the value of the green energy metric, and determines indication information.

For specific implementation of S901 to S905, refer to related descriptions in S701 to S705. Details are not described again.

S906: The self-organizing network management function sends, to the configuration management function, a request for modifying a green energy balancing function attribute.

The request for modifying the green energy balancing function attribute may include an identifier of the green energy balancing function and green energy reference indication information, and may further include a value range of the green energy metric.

In addition, for specific implementation of the green energy reference indication information, refer to related descriptions in S602. Details are not described herein again.

S907: The configuration management function modifies the green energy balancing function attribute.

S908: If green energy reference information indicates that the usage status of the green energy needs to be included in a reference input of load balancing optimization, the green energy balancing function performs green energy-based load balancing optimization.

A value of the green energy reference information may be represented by "yes/no", "on (on)/off (off)", or "0/1". This is not limited herein. For example, when the value of the green energy reference information is "yes", "on (on)", or "1", it indicates that the usage status of the green energy needs to be included in the reference input of the load balancing optimization. Green energy-based load balancing optimization is: When it is determined that a terminal device accesses a cell or performs base station handover, impact on a green energy metric of the cell or a base station after the handover is considered.

In addition, S903 to S908 may occur cyclically to reflect self-organizing of a network.

### Scenario 4:

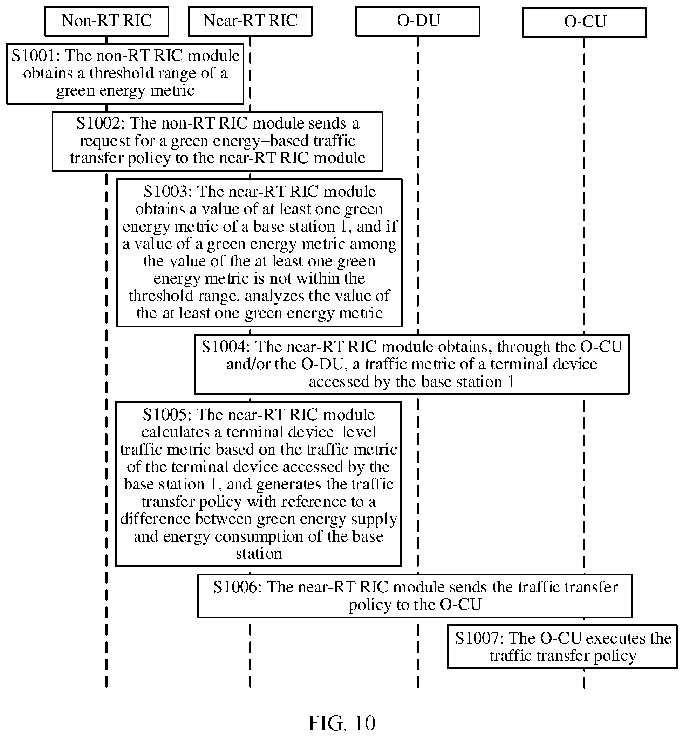

FIG. 10 is a schematic flowchart 5 of a green energy-based load transfer method according to an embodiment of this application. The green energy-based load transfer method is applicable to the foregoing O-RAN network architecture, and specifically relates to interaction among a near-RT RIC module (the foregoing first management function), a non-RT RIC module (the foregoing third management function), and an O-DU and an O-CU (the foregoing first base station). In the scenario 4, the near-RT RIC module analyzes a usage status of green energy of the first base station based on a green energy metric, and indicates the first base station to perform green energy-based load balancing between network elements, so that traffic between a plurality of cells may be intelligently controlled, thereby improving user experience.

Specifically, as shown in FIG. 10, a procedure of the green energy-based load transfer method is as follows:
S1001: A non-real-time radio intelligent controller module obtains a threshold range of the green energy metric.
S1002: The non-real-time radio intelligent controller module sends a request for a green energy-based traffic transfer policy to the near-real-time radio intelligent controller module.

The request for the green energy-based traffic transfer policy may include an identifier of a base station 1, the threshold range of the green energy metric, and green energy reference indication information. The green energy-based traffic transfer policy has a same function as the foregoing green energy balancing self-organizing service. The traffic transfer policy aims to intelligently control traffic between a plurality of cells through performance monitoring and closed-loop control, and carries the identifier of the base station 1 and a parameter of the threshold range of the green energy metric.

S1003: The near-real-time radio intelligent controller module obtains a value of at least one green energy metric of the base station 1, and if a value of a green energy metric in the value of the at least one green energy metric is not within the threshold range, analyzes the value of the at least one green energy metric.

For example, a gap between green energy supply and energy consumption of a base station is analyzed.

S1004: The near-real-time radio intelligent controller module obtains, through the open central unit and/or the open distributed unit, a traffic metric of a terminal device accessed by the base station 1.

For example, the near-real-time radio intelligent controller module obtains traffic of the terminal device accessed by the base station 1 and total traffic of the base station.

S1005: The near-real-time radio intelligent controller module calculates a terminal device-level traffic metric based on the traffic metric of the terminal device accessed by the base station 1, and generates the traffic transfer policy with reference to a difference between the green energy supply and the energy consumption of the base station.

For example, a proportion of the traffic of the terminal device in the total traffic of the base station is calculated. Because the proportion of the traffic of the terminal device in the total traffic of the base station is equal to a proportion of green energy consumption of the terminal device in total green energy consumption of the base station, an amount of green energy consumption at a terminal device level may be deduced.

S1006: The near-real-time radio intelligent controller module sends the traffic transfer policy to the open central unit.

S1007: The open central unit executes the traffic transfer policy.

In summary, a value of at least one green energy metric of a first network element is obtained via a first management function, a usage status of green energy of the first network element is analyzed based on the green energy metric, and indication information is sent. The indication information indicates, based on the value of the at least one green energy metric, the first network element to perform green energy-based load transfer between network elements. In this way, when the green energy cannot be flexibly allocated across communication devices, utilization of the green energy can be increased, thereby improving carbon emission efficiency of a communication device.

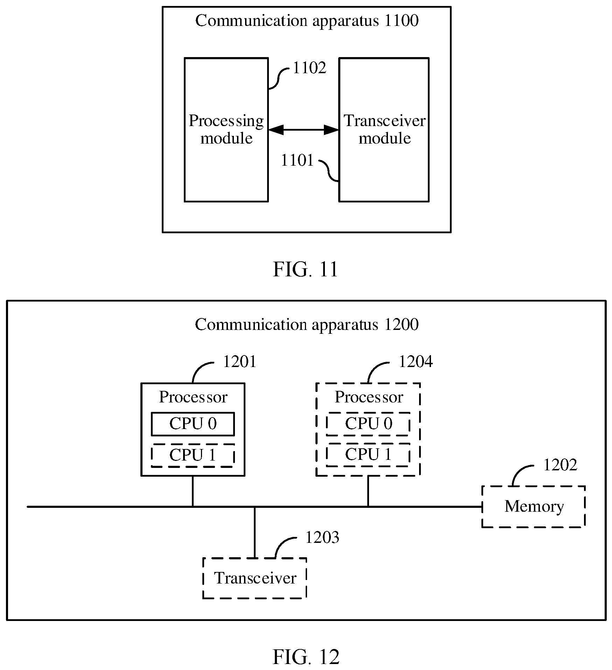

The foregoing describes the method provided in embodiments of this application in detail with reference to FIG. 6 to FIG. 10. With reference to FIG. 11 and FIG. 12, the following describes in detail a communication apparatus configured to perform the green energy-based load transfer method provided in embodiments of this application.

FIG. 11 is a diagram 1 of a structure of a communication apparatus according to an embodiment of this application. For example, as shown in FIG. 11, the communication apparatus 1100 includes a transceiver module 1101 and a processing module 1102. For ease of description, FIG. 11 shows only main parts of the communication apparatus.

The transceiver module 1101 is configured to perform receiving and sending functions in the method shown in FIG. 6, and the processing module 1102 is configured to perform a function in the method shown in FIG. 6 other than the receiving and sending functions.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or the instructions, the communication apparatus 1100 is enabled to perform a function of the terminal or the network device in the method shown in FIG. 6 in the foregoing method.

It may be understood that, the communication apparatus 1100 may be a terminal or a network device, may be a chip (system) or another part or component that may be disposed in the terminal or the network device, or may be an apparatus that includes the terminal or the network device. This is not limited in this application.

In addition, for technical effects of the communication apparatus 1100, refer to technical effects of the green energy-based load transfer method shown in FIG. 6 to FIG. 10. Details are not described herein again.

FIG. 12 is a diagram 2 of a structure of a communication apparatus according to an embodiment of this application. For example, the communication apparatus may be a terminal, or may be a chip (system) or another part or component that may be disposed in the terminal. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following specifically describes the components of the communication apparatus 1200 with reference to FIG. 12.

The processor 1201 is a control center of the communication apparatus 1200, and may be a processor or a generic term of a plurality of processing elements. For example, the processor 1201 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202, for example, perform the green energy-based load transfer method shown in FIG. 6.

During specific implementation, in an embodiment, the processor 1201 may include one or more CPUs, for example, a CPU 0 and a CPU 1 shown in FIG. 12.

During specific implementation, in an embodiment, the communication apparatus 1200 may also include a plurality of processors, for example, the processor 1201 and a processor 1204 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store the software program for performing the solutions in this application, and the processor 1201 controls execution. For a specific implementation, refer to the foregoing method embodiments. Details are not described herein again.

Optionally, the memory 1202 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can be for carrying or storing expected program code in a form of instructions or a data structure and that is accessible to a computer. However, this is not limited thereto. The memory 1202 may be integrated with the processor 1201, or may exist independently, and is coupled to the processor 1201 through an interface circuit (not shown in FIG. 12) of the communication apparatus 1200. This is not specifically limited in this embodiment of this application.

The transceiver 1203 is configured to communicate with another communication apparatus. For example, the communication apparatus 1200 is a terminal, and the transceiver 1203 may be configured to communicate with a network device or communicate with another terminal device. For another example, the communication apparatus 1200 is a network device, and the transceiver 1203 may be configured to communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through an interface circuit (not shown in FIG. 12) of the communication apparatus 1200. This is not specifically limited in this embodiment of this application.

It can be understood that, the structure of the communication apparatus 1200 shown in FIG. 12 does not constitute any limitation on the communication apparatus. An actual communication apparatus may include more or fewer components than those shown in the figure, a combination of some components, or a different arrangement of the components.

In addition, for technical effects of the communication apparatus 1200, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that, the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A green energy-based load transfer method, wherein the method is applied to a first management function and comprises:
obtaining a value of at least one green energy metric of a first network element, wherein the green energy metric indicates a usage status of green energy; and
sending indication information, wherein the indication information indicates, based on the value of the at least one green energy metric, the first network element to perform green energy-based load transfer between network elements.

2. The method according to claim 1, wherein before the sending the indication information, the method further comprises:
determining that a value of a first green energy metric among the at least one green energy metric is not within a threshold range.

3. The method according to claim 1 or 2, wherein the indication information indicates a first amount of load to be transferred between the first network element and a second network element based on the green energy metric.

4. The method according to claim 3, wherein the indication information comprises an identifier of the first network element, an identifier of the second network element, and the first amount of load, and the second network element is a network element of a same function type as the first network element.

5. The method according to any one of claims 1 to 4, wherein the at least one green energy metric comprises at least one of the following: carbon emission efficiency, an amount of green energy supply, an amount of energy consumption, green energy usage, a green energy power, a proportion of an amount of green energy consumption in the amount of energy consumption, remaining available green energy, carbon emission, and a carbon intensity.

6. The method according to any one of claims 1 to 5, wherein before the sending the indication information to the first network element, the method further comprises:
obtaining respective energy usage statuses of a plurality of network elements related to the first network element; and
determining, from the plurality of network elements based on the respective energy use statuses of the plurality of network elements, the second network element that is capable of performing load transfer with the first network element.

7. The method according to claim 6, wherein the respective energy use statuses of the plurality of network elements comprise differences between values of respective green energy metrics of the plurality of network elements and maximum values or minimum values in threshold ranges of the respective green energy metrics.

8. The method according to claim 6, wherein that the second network element is capable of performing load transfer with the first network element is that a difference between a value of a green energy metric of the first network element and a minimum value in a threshold range of the green energy metric matches a difference between a value of a green energy metric of the second network element and a maximum value in a threshold range of the green energy metric; or a difference between a value of a green energy metric of the first network element and a maximum value in a threshold range of the green energy metric matches a difference between a value of a green energy metric of the second network element and a minimum value in a threshold range of the green energy metric.

9. The method according to claim 1, wherein the indication information indicates a load balancing optimization function to perform green energy-based load balancing between network elements, and the load balancing optimization function is deployed on the first network element.

10. The method according to claim 9, wherein the indication information comprises at least one of the following: an identifier of the load balancing optimization function and green energy reference indication information, wherein the green energy reference indication information indicates whether to perform green energy-based load balancing between network elements based on the green energy metric.

11. The method according to claim 1, wherein the indication information indicates a green energy balancing function to perform green energy-based load transfer between network elements, and the green energy balancing function is deployed on the first network element.

12. The method according to claim 11, wherein the indication information comprises at least one of the following: an identifier of the green energy balancing function and green energy reference indication information, wherein the green energy balancing function is used to manage balance between green energy supply and energy consumption, and the green energy reference indication information indicates whether to perform green energy-based load transfer between network elements based on the green energy metric.

13. The method according to any one of claims 1 to 12, wherein the sending the indication information comprises:
sending the indication information to a second management function related to the first network element.

14. The method according to claim 1, wherein the first management function comprises a self-organizing network management function and a near-real-time radio intelligent controller module.

15. The method according to claim 14, wherein when the first management function is the near-real-time radio intelligent controller module, the first network element comprises a first base station; and the obtaining the value of the at least one green energy metric of the first network element comprises:
obtaining a traffic metric of a terminal device accessed by the first base station; and
determining, based on the traffic metric of the terminal device, a value of at least one green energy metric generated by the terminal device.

16. The method according to claim 15, wherein the indication information indicates a terminal device to be migrated between the first base station and a second base station based on the green energy, and the indication information comprises an identifier of the first base station, an identifier of the second base station, and an identifier of the terminal device to be migrated among the terminal device accessed by the first base station.

17. A green energy-base load transfer method, wherein the method is applied to a third management function and comprises:
obtaining a threshold range of a green energy metric; and
sending a green energy balancing service request to a first management function, wherein the green energy balancing service request comprises at least one of the following: an identifier of a first network element and the threshold range of the green energy metric.

18. A green energy-based load transfer method, wherein the method is applied to a fourth management function and comprises:
receiving a measurement request that is for a value of a green energy metric of a first network element and that is sent by a first management function; and
sending the value of the green energy metric of the first network element to the first management function based on the measurement request.

19. A green energy-based load transfer method, wherein the method is applied to a first network element and comprises:
receiving indication information, wherein the green energy metric indicates a usage status of green energy, and the indication information indicates the first network element to perform green energy-based load transfer between network elements; and
performing green energy-based load transfer between network elements based on the indication information.

20. The method according to claim 19, wherein the indication information indicates a first amount of load to be transferred between the first network element and a second network element based on the green energy metric.

21. The method according to claim 20, wherein the indication information comprises an identifier of the first network element, an identifier of the second network element, and the first amount of load, and the second network element is a network element of a same function type as the first network element.

22. The method according to any one of claims 19 to 21, wherein the at least one green energy metric comprises at least one of the following: carbon emission efficiency, an amount of green energy supply, an amount of energy consumption, green energy usage, a green energy power, a proportion of an amount of green energy consumption in the amount of energy consumption, remaining available green energy, carbon emission, and a carbon intensity.

23. The method according to any one of claims 20 to 22, wherein the second network element is a network element that is determined based on respective energy usage statuses of a plurality of network elements and that is capable of performing load transfer with the first network element, and the plurality of network elements are network elements related to the first network element.

24. The method according to claim 23, wherein the respective energy usage statuses of the plurality of network elements comprise differences between values of respective green energy metrics of the plurality of network elements and maximum values or minimum values in threshold ranges of the respective green energy metrics.

25. The method according to claim 23, wherein that the second network element is capable of performing load transfer with the first network element is that a difference between a value of a green energy metric of the first network element and a minimum value in a threshold range of the green energy metric matches a difference between a value of a green energy metric of the second network element and a maximum value in a threshold range of the green energy metric; or a difference between a value of a green energy metric of the first network element and a maximum value in a threshold range of the green energy metric matches a difference between a value of a green energy metric of the second network element and a minimum value in a threshold range of the green energy metric.

26. The method according to claim 19, wherein the indication information indicates a load balancing optimization function to perform green energy-based load balancing between network elements, the load balancing optimization function is deployed on the first network element, and the indication information comprises at least one of the following: an identifier of the load balancing optimization function and green energy reference indication information, wherein the green energy reference indication information indicates whether to perform green energy-based load balancing between network elements based on the green energy metric.

27. The method according to claim 19, wherein the indication information indicates a green energy balancing function to perform green energy-based load transfer between network elements, the green energy balancing function is deployed on the first network element, and the indication information comprises at least one of the following: an identifier of the green energy balancing function and green energy reference indication information, wherein the green energy balancing function is used to manage balance between the green energy supply and energy consumption, and the green energy reference indication information indicates whether to perform green energy-based load transfer between network elements based on the green energy metric.

28. A communication apparatus, wherein the apparatus comprises a module configured to perform the method according to any one of claims 1 to 27.

29. A communication apparatus, wherein the communication apparatus comprises a processor and a memory, and the memory is configured to store computer instructions; and when the processor executes the instructions, the communication apparatus is enabled to perform the method according to any one of claims 1 to 27.

30. A computer-readable storage medium, wherein the computer-readable storage medium comprises a computer program or instructions; and when the computer program or the instructions are run on a computer, the computer is enabled to perform the method according to any one of claims 1 to 27.
